# EUROPEAN PATENT APPLICATION

(11) **EP 2 590 353 A1**
(43) Date of publication of application: **08.05.2013**
(21) Application number: 13153699.7
(22) Date of filing: 14.03.2008
(51) Int. Cl.: H04L 5/02

(54) **Transmission of ACK/NACK and transmit power control feedback in evolved utra**

(30) Priority: 14.03.2007 US 894709 P; 18.03.2007 US 895470 P
(62) Divisional of application: 08742107.9
(71) Applicant: InterDigital Technology Corporation, Wilmington, DE 19809 (US)
(72) Inventor: Grieco, Donald M., Manhassett, NY New York 11030 (US); Zhang, Guodong, Syosset, NY New York 11791 (US); Olesen, Robert L., Huntington, NY New York 11743 (US); Tsai, Allan Y., Boonton, NJ New Jersey 07005 (US)
(74) Representative: Hansson, Anders Max

(57) **Abstract**

A method for transmitting feedback information for a wireless transmit receive unit (WTRU) includes multiplexing the feedback information with an uplink shared channel, mapping the multiplexed feedback information to OFDM symbols and transmitting the feedback information to an evolved Node B (eNB). The method also includes multiplexing the feedback information with the uplink shared channel using distributed frequency division multiplexing (FDM), mapping the feedback information to a first orthogonal frequency division multiplex (OFDM) symbol, and distributing the mapped feedback information equidistantly across the transmission bandwidth.

## Description

FIELD OF INVENTION

The present invention is related to wireless communications.

BACKGROUND

A goal of the Third Generation Partnership Project (3GPP) Long Term Evolution (LTE) program is to develop new technology, new architecture and new methods for settings and configurations in wireless communication systems in order to improve spectral efficiency, reduce latency and better utilize the radio resource to bring faster user experiences and richer applications and services to users with lower costs.

In order to reduce the signaling overhead in a 3GPP LTE system, a predetermined one-to-one mapping between the index of the uplink shared data channel and the index of downlink physical resources carrying acknowledge/non-acknowledge (ACK/NACK) feedback for uplink data transmission has been shown. A wireless transmit receive unit (WTRU) identification (ID) is implicitly carried with the ACK/NACK information. The WTRU can receive the ACK/NACK without decoding any additional side information.

The transmission of transmit power control (TPC) information for uplink data is a consideration for LTE. An efficient and reliable transmission of TPC is desirable.

SUMMARY

A method and apparatus is disclosed for transmitting feedback information for a WTRU. The method may include implicitly mapping the feedback information with an uplink shared channel and transmitting the feedback information to an e Node B (eNB). The method may also include multiplexing the feedback information with the uplink shared channel using distributed frequency division multiplexing (FDM), Code Division Multiplexing (CDM) or hybrid FDM/CDM, mapping the feedback information to orthogonal frequency division multiplex (OFDM) symbols, and distributing the mapped feedback information equidistantly across the transmission bandwidth.

BRIEF DESCRIPTION OF THE DRAWINGS

A more detailed understanding may be had from the following description, given by way of example and to be understood in conjunction with the accompanying drawing wherein:

Figure 1 shows an example of a wireless communication system in accordance with one embodiment;

Figure 2 shows a functional block diagram of a WTRU and an eNB of Figure 1;

Figure 3 is a subset of a map of an acknowledge/non-acknowledge channel (ACKCH) using distributed frequency division multiplexing (FDM) in accordance with one embodiment;

Figure 4 is a subset of a map of an acknowledge/non-acknowledge channel (ACKCH) using distributed frequency division multiplexing (FDM) in accordance with an alternative embodiment;

Figure 5 is a map of an acknowledge/non-acknowledge channel (ACKCH) using distributed frequency division multiplexing (FDM) in accordance with another alternative embodiment;

Figure 6 is a map of an ACKCH using distributed hybrid FDM/code division multiplexing (CDM) in accordance with another embodiment; and

Figure 7 is a map of an ACKCH using distributed hybrid FDM/CDM with two localized radio bearers (RBs) in accordance with another alternative embodiment.

DETAILED DESCRIPTION

When referred to hereafter, the term "wireless transmit/receive unit (WTRU)" includes, but is not limited to, a user equipment (UE), a mobile station, a fixed or mobile subscriber unit, a pager, a cellular telephone, a personal digital assistant (PDA), a computer, or any other type of user device capable of operating in a wireless environment. When referred to hereafter, the term "base station" includes, but is not limited to, a Node B, a site controller, an access point (AP), or any other type of interfacing device capable of operating in a wireless environment.

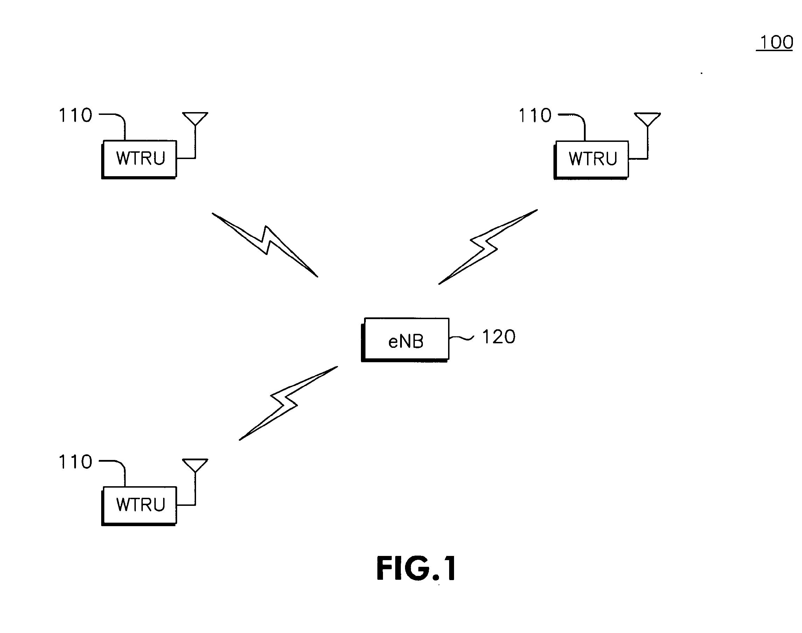

Figure 1 shows a wireless communication system 100 including a plurality of WTRUs 110 and an eNB 120. As shown in Figure 1, the WTRUs 110 are in communication with the eNB 120. Although three WTRUs 110 and one eNB 120 are shown in Figure 1, it should be noted that any combination of wireless and wired devices may be included in the wireless communication system 100.

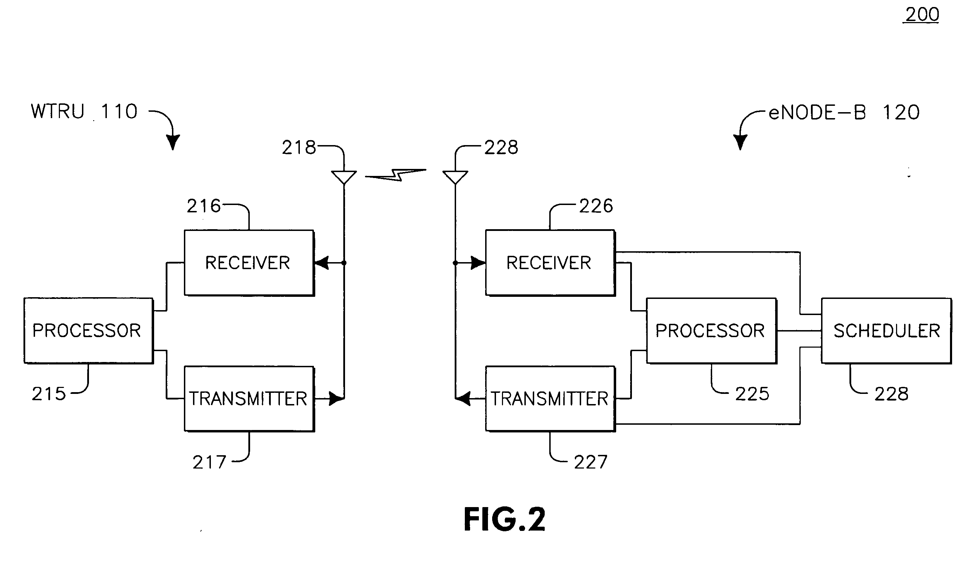

Figure 2 is a functional block diagram 200 of the WTRU 110 and the eNB 120 of the wireless communication system 100 of Figure 1. As shown in Figure 2, the WTRU 110 is in communication with the eNB 120. The WTRU 110 is configured to receive scheduling grants from the eNB 120. The WTRU is also configured to receive and transmit ACK/NACK signals and power control signals from and to the eNB. Both the eNB and the WTRU are configured to process signals that are modulated and coded.

In addition to the components that may be found in a typical WTRU, the WTRU 110 includes a processor 215, a receiver 216, a transmitter 217, and an antenna 218. The receiver 216 and the transmitter 217 are in communication with the processor 215. The antenna 218 is in communication with both the receiver 216 and the transmitter 217 to facilitate the transmission and reception of wireless data.

In addition to the components that may be found in a typical eNB, the eNB 120 includes a processor 225, a receiver 226, a transmitter 227, and an antenna 228. The receiver 226 and the transmitter 227 are in communication with the processor 225. The antenna 228 is in communication with both the receiver 226 and the transmitter 227 to facilitate the transmission and reception of wireless data.

The eNB 120 includes a scheduler 228. The scheduler 228 monitors and processes requests from the WTRU 110 and distributes resources according to the requests. In general, the WTRU 110 can operate in dynamic scheduling mode or persistent scheduling mode. In dynamic scheduling mode, for each transmission time interval (TTI), a scheduling determination is made by the scheduler 228 and a scheduling grant is transmitted from the eNB 120 to the WTRU 110. In a persistent scheduling mode, the scheduling grant is not transmitted in every TTI. Rather, the eNB may transmit a single scheduling grant for multiple TTIs.

While in dynamic scheduling mode, the eNB 120 may transmit ACK/NACK information and TPC information in the uplink scheduling grant sent to the WTRU 110.

However, while in persistent scheduling mode, the eNB 120 does not transmit a regular uplink scheduling grant. Instead, the eNB 120 may transmit transmission power control (TPC) information and ACK/NACK information using an implicit mapping to an uplink shared channel. The ACK/NACK information may be transmitted in an ACK/NACK channel (ACKCH), the TPC in a TPC channel (TPCCH) and both the ACK/NACK and the TPC in an ACK/NACK/TPC channel (ATCH). For purposes of description of a particular embodiment, any of the channels may be used. One skilled in the art would recognize that one channel may be substituted for another and the methods and apparatus disclosed herein are not channel specific.

In one example, a cell may use a 10 MHz bandwidth in the uplink that includes 50 radio bearers. After subtracting for use of resources by the uplink control channels, such as a random access channel (RACH), acknowledge channel (ACKCH) and channel quality index channel (CQICH), 44-48 uplink WTRUs can be supported simultaneously. Therefore, 44 - 48 ACKCHs may be needed in the downlink, one for each WTRU.

Each communication channel may include several resource elements (REs), wherein an RE is defined as one subcarrier over the time of one orthogonal frequency division multiplexed (OFDM) symbol. For a MIMO system with 4 antennas there are 200 reference signal tones (REs) and 400 non-reference-signal tones (REs) in each of the first and second OFDM symbols simultaneously. An ACKCH may occupy K distributed and equidistant REs. Since the duration of an OFDM symbol is much smaller than channel coherence time, little time diversity would be created by splitting REs over more than one OFDM symbols. Therefore, the K REs of an ACKCH may be mapped into one OFDM symbol. An ACKCH can be mapped to any of first n (for n≤3) OFDM symbols. However, it is possible to map an ACKCH to the first, or earliest, OFDM symbol in a TTI to maintain consistent HARQ latency for all WTRUs.

As there are 200 reference signal tones available in the downlink, and 44 -48 simultaneous WTRUs are in the uplink, each requiring a dedicated ACKCH, the value of K is limited to 4. If the uplink was limited to 40 simultaneous WTRUs, K could be as large as 5.

In a multiple input/multiple output (MIMO) system with 2 antennas, 200 of the sub-carriers would contain reference signals, leaving 400 non-reference-signal tones. In order to accommodate 44 simultaneous WTRUs, K could be no larger than 9, and for 48 WTRUs K could be no larger than 8. If 40 WTRUs require support, K could be as large as 10.

If the ACKCH is mapped to an OFDM symbol that does not carry any reference signals, for 44 WTRUs in the uplink, and 600 available non-reference-signal tones, the maximum value of K is 13. For 48 WTRUs in the uplink, the maximum value of K is 14. If 40 WTRUs are supported, the value of K may be as high as 15.

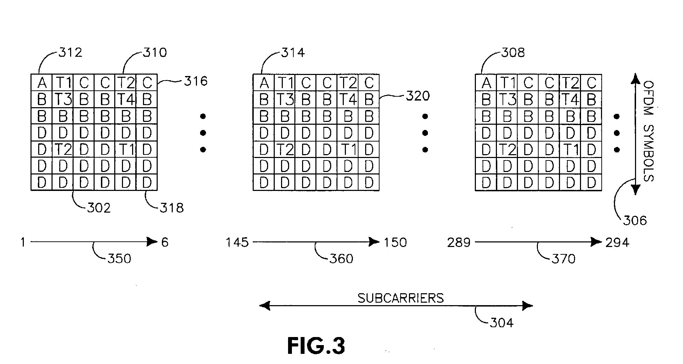

Figure 3 is a subset of a complete mapping the ACKCH 300 using distributed frequency division multiplexing (FDM) in accordance with one embodiment. The complete mapping is a resource grid of 600 subcarriers by seven (7) OFDM symbols. Shown in Figure 3 is a subset of the complete mapping showing subcarriers 1 through 6 (350), subcarriers 145 through 150 (360) and subcarriers 289 through 294 (370). The subcarriers are mapped to seven (7) OFDM symbols 306. Also shown are data symbols (D) 318, control symbols (C) 316, data or control symbols (B) 320, antenna reference symbols (Tₓ) 310 and symbols carrying the ACKCH (308, 312, 314). Each ACKCH symbol (308, 312, 314) may be spaced equidistant across all the subcarriers and cannot occupy the same space as an antenna reference signal (Tx) 310. For example, the ACKCH 300 may be mapped to an OFDM symbol at subcarier 1 (312), subcarrier 145 (314), subcarrier 289 (308) and subcarrier 433 (not shown).

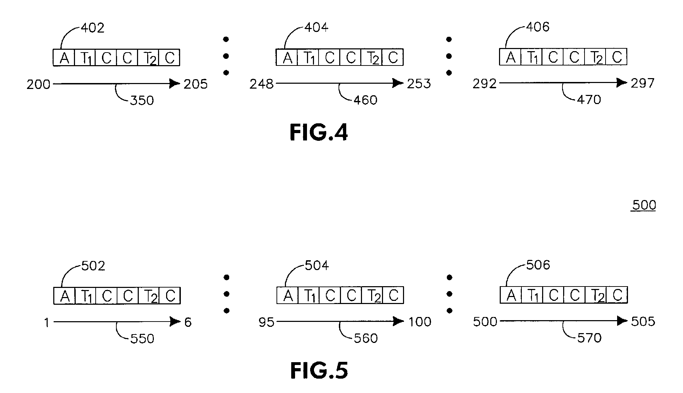

Alternatively, the ACKCH 300 may be mapped to symbols in central subcarriers. Figure 4 is a subset of a complete mapping of the ACKCH 300 using distributed frequency division multiplexing (FDM) in accordance with an alternative embodiment. Figure 4 shows one OFDM symbol across subcarriers from the middle of the frequency spectrum, specifically, from subcarrier 200 through 205 (450) subcarriers 248 through 253 (460) and subcarriers 292 through 297 (470). The ACKCH 300 may be mapped to the symbols at subcarrier 200 (402), subcarrier 248 (404), subcarrier 292 (406) and subcarrier 336(not shown).

As another alternative, the ACKCH 300 may be mapped to the symbols at the outer subcarriers of the band. Figure 5 is a subset of a complete mapping the ACKCH 300 using distributed frequency division multiplexing (FDM) in accordance with another alternative embodiment. Figure 5 shows one OFDM symbol across subcarriers from the outer bands, specifically, from subcarriers 1 through 6 (550), subcarriers 95 through 100 (560) and subcarriers 500 through 505 (570). The ACKCH 300 may be mapped to the OFDM symbol at subcarrier 1(502), subcarrier 95 (504), subcarrier 500 (506) and subcarrier 595 (not shown).

As yet another alternative, the ACKCH 300 may be mapped to allow mapping of an integer number of downlink or uplink scheduling grant channels (DSGCHs or USGCHs) in the first OFDM symbol. This may save additional overhead.

Alternatively, a higher order modulation, such as BPSK or QPSK may be used to generate modulated symbols to be used in the downlink to represent TPC information with ACK/NACK information. The symbols may be transmitted by a repeated coding used for transmission of TPC and ACK/NACK. This may be applied when the downlink control channel that carries TPC and ACK/NACK is multiplexed with other control channels using frequency division multiplexing (FDM).

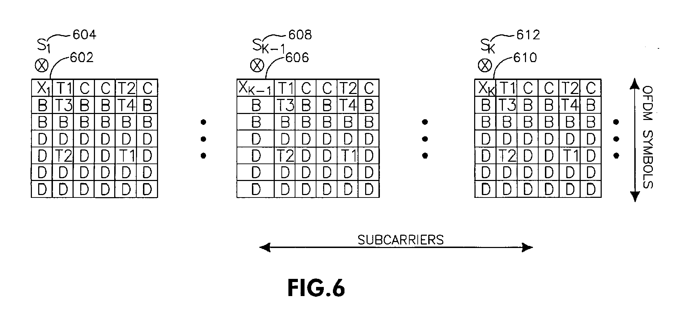

Figure 6 is a mapping of an ACKCH 600 using distributed hybrid FDM/ code division multiplexing (CDM) in accordance with another embodiment. The ACKCH 600 may occupy *K* distributed and equidistant REs, similar to the mapping of ACKCH 300 in Figure 3. Additionally, a control symbol mapped in the same OFDM symbol as the ACKCH symbol may be spread by a constant amplitude zero auto-correlation (CAZAC) sequence. As shown in Figure 6, a first symbol 602 of ACKCH 600 may be multiplied by S₁604 (the first chip/symbol of sequence S with length K). A k^{th} symbol 606 of the ACKCH 600 may be multiplied by S(ₖ₋₁) 608 (the k^{th} chip/symbol of sequence S). The last symbol, X_{K} 610 of the ACKCH 600 may be multiplied by Sₖ 612 (the K^{th} chip/symbol of sequence S).

If the total number of all subcarriers in an OFDM symbol is N and the number of REs in the same OFDM symbol is *M* (*M*≤*K*), then the CAZAC sequence spread over the M REs may be either a cyclic-shifted CAZAC sequence with sequence length *M*, or a cyclic-shifted polyphase decomposed sequence of a long CAZAC sequence with length *N*. In the latter case, the polyphase decomposition factor is *N*/*M,* which implies the polyphase decomposed sequence has length *M*.

Similar to the mapping shown in Figure 3, the ACKCH 600 may be mapped onto the first three (3) symbols. Mapping the channel to the first, or earliest, OFDM symbols in a TTI helps to maintain a consistent HARQ latency for all WTRUs. Furthermore, a CAZAC sequence may be used as the spreading sequence with a spreading sequence with a length equal to a prime number, meaning *M* or *K* may be prime.

Alternatively, cyclic-shifts may be used with a difference that is co-prime to the sequence length when the spreading sequence has the length of a non-prime number. When using localized hybrid FDM/CDM multiplexing, a CAZAC sequence on each RB (or a subset of consecutive subcarriers) can also be used as the spreading sequence instead of a Hadamard sequence.

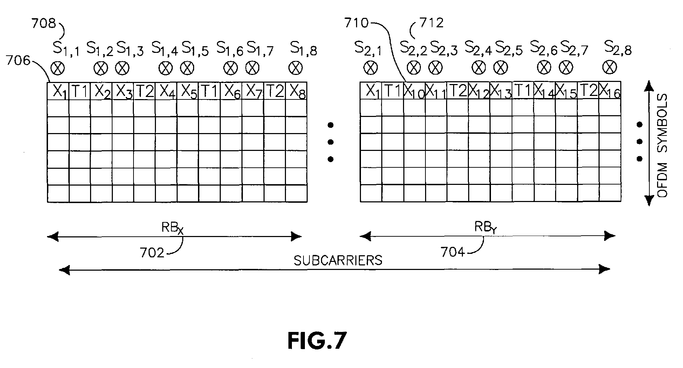

Figure 7 is an example mapping of an ACKCH 700 using localized hybrid FDM/CDM with two localized RBs 702,704, in accordance with an alternative embodiment. The ACKCH 700 may be mapped to several localized RBs. The mapping may be discontinuous and equidistant across all the sub-carriers. As shown in Figure 7, the ACKCH 700 is mapped to RBx 702 and RBy 704, each of whose distance is half of the cell bandwidth. An orthogonal spreading sequence is used in each RB (702,704) used by the ACKCH 700. The sequence can be a CAZAC sequence or another orthogonal sequence, such as a Hadamard.

A control symbol mapped in the same OFDM symbol as the ACKCH symbol may be spread by a constant amplitude zero auto-correlation (CAZAC) sequence. As shown in Figure 7, the ACKCH 700 mapped on RB x 702 may be spread by sequence S₁ 708, and ACKCH 700 mapped to RB y 704 may be spread by the S₂ 712.

Alternatively, if a CAZAC sequence with two different cyclic shifts is used to represent ACK/NACK, a BPSK, QPSK, or other higher order modulation modulated CAZAC sequence can be used for transmission of TPC and ACK/NACK. This may be used when the downlink control channel that carries TPC and ACK/NACK is multiplexed with other control channels using CDM or hybrid FDM/CDM.

The time and frequency locations of downlink control channels carrying uplink or downlink scheduling grants information, such as an uplink scheduling grant channel (USGCH) and a downlink scheduling grant channel (DSGCH), for example, may be implicitly indicated. For a WTRU to receive a USGCH and DSGCH in the downlink, it may monitor a set of control channel candidates and detect which one carrying its control information by checking the CRC. If the downlink ACKCH uses CDM or hybrid FDM/CDM based multiplexing, the orthogonal sequence, such as a CAZAC sequence, for example, can be used to carry implicit information so that the WTRU may monitor a reduced set of control channel candidates.

For example, if two ACKCHs are mapped into the same time-frequency resources and use CAZAC sequences to separate them, the CAZAC sequence can support up to four orthogonal cyclic-shifted sequences when mapped to the predefined time-frequency resources. For each ACKCH, two cyclic shifts can be used to carry 1 bit of information about the location of the USGCH and DSGCH. If a WTRU is signaled by a higher layer to monitor a set of *K* control channel candidates, the WTRU can use the 1 bit of information to determine if the USGCH or DSGCH is carried on a first or second half set of control channel candidates. This allows the WTRU to eliminate half of the control channel candidates without searching. The WTRU may save processing time and the probability of false cyclic redundancy check (CRC) pass may be reduced.

In another embodiment, when uplink multi-user MIMO (MU-MIMO) is used, two or more WTRUs may occupy the same uplink resource block. A predetermined one-to-one mapping between the index of the uplink shared data channel and the index of downlink physical resources carrying ACK/NACK feedback can not distinguish between two WTRUs. However, as stated above, the downlink control channels carrying ACK/NACK and TPC information for WTRUs that occupy the same uplink resource block may be multiplexed using CDM and spread by different orthogonal sequences. In this way, those feedback channels are orthogonal to each other.

The TPC may be transmitted as one (1) bit (up or down), two (2) bits (up, down or hold) or three (3) bits. A modulation, such as QPSK or higher order, for example, may be used to generate modulated symbols to be used in the downlink to represent TPC and ACK/NACK information. The symbols may be transmitted by a repeated coding used for transmission of TPC and ACK/NACK. This may be applied when the downlink control channel that carries TPC and ACK/NACK is multiplexed with other control channels using frequency division multiplexing (FDM).

Alternatively, a CAZAC sequence with four different cyclic shifts may be used to represent ACK/NACK plus a one (1) bit TPC. For a TPC with more than one (1) bit, either more cyclic shifts can be used or a BPSK (or QPSK) modulated by a CAZAC sequence with four different cyclic shifts can be used to represent TPC and ACK/NACK information.

In another embodiment, for a persistently scheduled WTRU, the TPC may be transmitted alone using an implicit mapping to the uplink shared channel.

When uplink MU-MIMO is not used, different WTRUs may occupy the different uplink resource blocks. A predetermined one-to-one mapping between the index of the uplink shared data channel and the index of physical resources carrying TPC information for uplink data transmission may be used. The WTRU ID may be implicitly carried with the TPC information. The WTRU can receive the TPC information without decoding any additional side information.

EMBODIMENTS

1. A method for transmitting feedback information from a wireless transmit receive unit (WTRU), the method comprising multiplexing the feedback information with an uplink shared channel.

2. The method as in embodiment 1 further comprising mapping the feedback information to orthogonal frequency domain multiplex (OFDM) symbols.

3. The method as in embodiment 1 or 2 further comprising transmitting the feedback information to an e Node B (eNB).

4. The method as in embodiment 2 or 3 further comprising multiplexing the feedback information with the uplink shared channel using distributed frequency division multiplexing (FDM).

5. The method as in any one of embodiments 2-4 further comprising mapping the feedback information to a first orthogonal frequency division multiplex (OFDM) symbol.

6. The method as in any one of embodiments 2-5 further comprising distributing the mapped feedback information equidistantly across the transmission bandwidth.

7. The method as in any one of embodiments 1-6 wherein the feedback information comprises a transmit power control (TPC) signal.

8. The method as in any one of embodiments 1-6 wherein the feedback information comprises an acknowledge/non-acknowledge (ACK/NACK) signal.

9. The method as in any one of embodiments 2-8 further comprising multiplexing the feedback information with the uplink shared channel using a hybrid distributed frequency division multiplexing (FDM)/code division multiplexing (CDM) scheme, mapping the feedback information to as least two local radio bearers, and multiplying the feedback information by an orthogonal spreading sequence.

10. The method as in embodiment 9 wherein the orthogonal sequence is a CAZAC sequence.

11. The method as in embodiment 9 wherein the orthogonal sequence is a Hadamard sequence.

12. A method for transmitting a feedback channel from an e Node B to a persistently scheduled wireless transmit receive unit (WTRU), the method comprising multiplexing the feedback channel with a control channel.

13. The method as in embodiment 12 further comprising assigning the multiplexed channel to at least one resource element (RE).

14. The method as in embodiment 12 or 13 further comprising mapping the multiplexed channel to at least one orthogonal frequency division multiplexed (OFDM) symbol.

15. The method as in any one of embodiments 12-14 wherein the feedback channel comprises an acknowledgement (ACK/NACK) channel (ACKCH).

16. The method as in any one of embodiments 12-14 wherein the feedback channel comprises a transmission power control channel (TPCCH).

17. The method as in any one of embodiments 12-14 wherein the feedback channel comprises a channel comprising an ACK/NACK and TPC information channel (ATCH).

18. The method as in any one of embodiments 12-17 further comprising transmitting a multiplexed downlink scheduling grant, and implicitly indicating a location of the downlink scheduling grant channel in a resource grid.

19. A wireless transmit receive unit (WTRU) comprising a processor configured to multiplex a plurality of feedback information with an uplink shared channel and map the multiplexed feedback information to orthogonal frequency domain multiplex (OFDM) symbols.

20. The WTRU as in embodiment 19 further comprising a transmitter configured to transmit the multiplexed feedback information to an e Node B (eNB).

21. The WTRU as in embodiment 19 or 20 further comprising a processor configured to multiplex the feedback information with the uplink shared channel using distributed frequency division multiplexing (FDM), map the feedback information to a first orthogonal frequency division multiplex (OFDM) symbol; and distribute the mapped feedback information equidistantly across a transmission bandwidth.

22. The WTRU as in any one of embodiments 19-21 wherein the feedback information comprises a transmit power control (TPC) signal.

23. The WTRU as in any one of embodiments 19-21 wherein the feedback information comprises an acknowledge/non-acknowledge (ACK/NACK) signal.

24. The WTRU as in any one of embodiments 19-24 further comprising a processor configured to multiplex the feedback information with the uplink shared channel using a hybrid distributed frequency division multiplexing (FDM)/code division multiplexing (CDM) scheme, map the feedback information to as least two local radio bearers, and multiply the feedback information by an orthogonal spreading sequence.

25. The WTRU as in embodiment 24 wherein the orthogonal sequence is a CAZAC sequence.

26. The WTRU as in embodiment 24 wherein the orthogonal sequence is a Hadamard sequence.
27. A method for transmitting feedback information from a wireless transmit receive unit (WTRU), the method comprising:
   multiplexing the feedback information with an uplink shared channel:
      mapping the feedback information to orthogonal frequency domain multiplex (OFDM) symbols; and
      transmitting the feed back information to an e Node B (eNB).
28. The method as in emb. 27 further comprising:
   multiplexing the feedback information with the uplink shared channel using distributed frequency division multiplexing (FDM);
   mapping the feedback information to a first orthogonal frequency division multiplex (OFDM) symbol; and
   distributing the mapped feedback information equidistantly across the transmission bandwidth
29. The method as in emb 27 wherein the feedback information comprises a transmit power control (TPC) signal.
30. The method as in emb. 27 wherein the feedback information comprises an acknowledge/non-acknowledge (ACK/NACK) signal.
31. The method as in emb. 27 further comprising:
   multiplexing the feedback information with the uplink shared channel using a hybrid distributed frequency division multiplexing (FDM)/code division multiplexing (CDM) scheme;
   mapping the feedback information to as least two local radio bearers; and
   multiplying the feedback information by an orthogonal spreading sequence.
32. The method as in emb. 31 wherein the orthogonal sequence is a CAZAC sequence.
33. The method as in emb. 31 wherein the orthogonal sequence is a Hadamard sequence.
34. A method for transmitting a feedback channel from an e Node B to a persistently scheduled wireless transmit receive unit (WTRU), the method comprising:
   multiplexing the feedback channel with a control channel;
   assigning the multiplexed channel to at least one resource element (RE); and
   mapping the multiplexed channel to at least one orthogonal frequency division multiplexed (OFDM) symbol.
35. The method as in emb. 34 wherein the feedback channel comprises an acknowledgement (ACK/NACK) channel (ACKCH).
36. The method as in emb. 34 wherein the feedback channel comprises a transmission power control channel (TPCCH).
37. The method as in emb. 34 wherein the feedback channel comprises a channel comprising an ACK/NACK and TPC information channel (ATCH).
38. The method as in emb. 34 further comprising:
   transmitting an multiplexed downlink scheduling grant; and
   implicitly indicating a location of the downlink scheduling grant channel in a resource grid.
39. A wireless transmit receive unit (WTRU) comprising:
   a processor configured to multiplex a plurality of feedback information with an uplink shared channel and map the multiplexed feedback information to orthogonal frequency domain multiplex (OFDM) symbols; and
   a transmitter configured to transmit the multiplexed feedback information to an e Node B (eNB).
40. The WTRU as in emb. 39 further comprising:
   a processor configured to:
      multiplex the feedback information with the uplink shared channel using distributed frequency division multiplexing (FDM);
      map the feedback information to a first orthogonal frequency division multiplex (OFDM) symbol; and
      distribute the mapped feedback information equidistantly across a transmission bandwidth.
41. The WTRU as in emb. 39 wherein the feedback information comprises a transmit power control (TPC) signal.
42. The WTRU as in emb. 39 wherein the feedback information comprises an acknowledge/non-acknowledge (ACK/NACK) signal.
43. The WTRU as in emb 39 further comprising a processor configured to:
   multiplex the feedback information with the uplink shared channel using a hybrid distributed frequency division multiplexing (FDM)/code division multiplexing (CDM) scheme;
   map the feedback information to as least two local radio bearers; and
   multiply the feedback information by an orthogonal spreading sequence.
44. The WTRU as in emb. 43 wherein the orthogonal sequence is a CAZAC sequence.
45. The WTRU as in emb. 43 wherein the orthogonal sequence is a Hadamard sequence.

Although the features and are described in particular combinations, each feature or element can be used alone without the other features and elements or in various combinations with or without other features and elements. The methods or flow charts provided may be implemented in a computer program, software, or firmware tangibly embodied in a computer-readable storage medium for execution by a general purpose computer or a processor. Examples of computer-readable storage mediums include a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs).

Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), and/or a state machine.
A processor in association with software may be used to implement a radio frequency transceiver for use in a wireless transmit receive unit (WTRU), user equipment (UE), terminal, base station, radio network controller (RNC), or any host computer. The WTRU may be used in conjunction with modules, implemented in hardware and/or software, such as a camera, a video camera module, a videophone, a speakerphone, a vibration device, a speaker, a microphone, a television transceiver, a hands free headset, a keyboard, a Bluetooth® module, a frequency modulated (FM) radio unit, a liquid crystal display (LCD) display unit, an organic light-emitting diode (OLED) display unit, a digital music player, a media player, a video game player module, an Internet browser, and/or any wireless local area network (WLAN) module.

## Claims

1. A method used by a wireless transmit receive unit, WTRU, (110) the method comprising:
receiving at least one uplink scheduling grant including transmit power control, TPC, information indicating a relative power level; and
transmitting information to an eNodeB in accordance with the relative power level indicated in the TPC information.

2. The method of claim 1, further comprising:
decoding the received at least one uplink scheduling grant; and
processing the information for transmission to the eNodeB based on the decoded at least one uplink scheduling grant.

3. The method of claim 2, further comprising setting a power level for transmission of the information to the eNodeB based on the relative power level indicated in the TPC information.

4. The method of claim 1, wherein each uplink scheduling grant is associated with a respectively different transmission time interval.

5. The method of claim 1, wherein the at least one uplink scheduling grant is a plurality of uplink scheduling grants such that a first one of the uplink scheduling grants is associated with a first transition time interval and a second one of the uplink scheduling grants is associated with a second, different transition time interval.

6. The method of claim 2, wherein:
the processing of the information for transmission includes:
multiplexing feedback information into an uplink channel in accordance with the at least one uplink scheduling grant; and
assigning the multiplexed feedback information to one or more orthogonal frequency domain multiplexing, OFDM, symbols; and
the transmitting of the information to the eNodeB includes transmitting the one or more OFDM symbols having the assigned feedback information.

7. The method of claim 6, wherein the assigning of the feedback information to the OFDM symbols includes assigning the uplink channel, as an uplink shared channel, multiplexed with the feedback information to a first one of the one or more OFDM symbols.

8. A wireless transmit receive unit, WTRU, (110) comprising:
a receiver (216) configured to receive an uplink scheduling grant for a transmission time interval, TTI, wherein the uplink scheduling grant includes transmit power control, TPC, information indicating a relative power level; and
a processor (215) configured to decode the uplink scheduling grant including the TPC information.

9. The WTRU of claim 8, wherein the processor is configured to decode the uplink scheduling grant received on a shared downlink channel including decoding additional control information and the TPC information.

10. The WTRU of claim 9, wherein the TPC information and the additional control information are assigned quadrature phase shift keying modulated symbols.

11. The WTRU of claim 8, wherein the processor is configured to receive the uplink scheduling grant on a downlink channel, wherein the downlink channel is multiplexed using one of:
code division multiplexing, CDM,
frequency division multiplexing, FDM, or
hybrid FDM/CDM.

12. The WTRU of claim 8, wherein the TPC information is provided by a plurality of bits.

13. An eNodeB (120), comprising:
a processor (225) configured to generate at least one uplink scheduling grant including transmission power control, TPC, information indicating a relative power level; and
a transmitter (227) configured to transmit the at least one uplink scheduling grant on a downlink channel to a wireless transmit/receive unit, WTRU.
